(19)
**Europäisches Patentamt**
**European Patent Office**
**Office européen des brevets**

(11) **EP 4 517 614 A1**

(12) **EUROPEAN PATENT APPLICATION**

(43) Date of publication:
**05.03.2025 Bulletin 2025/10**

(21) Application number: **24197697.6**

(22) Date of filing: **30.08.2024**

(51) International Patent Classification (IPC):
**G06Q 10/04** (2023.01)   **G06Q 50/06** (2024.01)
**G06Q 40/12** (2023.01)   **G06N 3/02** (2006.01)
**G06N 20/00** (2019.01)   **G06N 3/044** (2023.01)

(52) Cooperative Patent Classification (CPC):
**G06N 3/044; G06Q 10/04; G06Q 50/06;** G06N 3/02;
G06N 20/00; G06Q 40/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 CN 202311100734**

(71) Applicants:
• **STATE GRID BLOCKCHAIN TECHNOLOGY
(BEIJING)
CO., LTD.
Beijing 100053 (CN)**
• **Beijing Power Exchange Center Co., Ltd.
Beijing 100031 (CN)**
• **Shanghai Power Exchange Center Co., Ltd.
Shanghai 200122 (CN)**
• **State Grid Henan Electric Power Co., Ltd.
Zhengzhou, Henan 450099 (CN)**
• **State Grid Digital Technology Holding
CO., LTD.
Beijing 100053 (CN)**

(72) Inventors:
• **WANG, Dong
Beijing 100053 (CN)**
• **XIE, Kai
Beijing 100031 (CN)**
• **CHANG, Qing
Beijing 100031 (CN)**
• **ZHANG, Xian
Beijing 100031 (CN)**
• **XIE, Wen
Beijing 100031 (CN)**
• **ZHANG, Nan
Beijing 100031 (CN)**
• **JI, Shijie
Beijing 100031 (CN)**
• **ZHAO, Lihua
Beijing 100053 (CN)**

• **XU, Liang
Beijing 100031 (CN)**
• **LI, Da
Beijing 100053 (CN)**
• **YANG, Jing
Shanghai 200122 (CN)**
• **BAI, Desheng
Beijing 100053 (CN)**
• **YU, Songtai
Beijing 100053 (CN)**
• **GUO, Qinglei
Beijing 100053 (CN)**
• **WANG, Xinyan
Zhengzhou 450099 (CN)**
• **CHEN, Chunyi
Shanghai 200122 (CN)**
• **YU, Tao
Shanghai 200122 (CN)**
• **ZHANG, Xuesen
Beijing 100053 (CN)**
• **DU, Zhe
Beijing 100053 (CN)**
• **LEI, Mingyang
Beijing 100053 (CN)**
• **YANG, Rui
Beijing 100053 (CN)**
• **CHI, Zhongjun
Beijing 100053 (CN)**
• **LI, Wenjian
Beijing 100053 (CN)**
• **LI, Na
Beijing 100053 (CN)**
• **ZHENG, Shangzhuo
Beijing 100053 (CN)**
• **LI, Wencui
Zhengzhou 450099 (CN)**
• **LI, Dong
Zhengzhou 450099 (CN)**

(74) Representative: **Meyer, Thorsten
Meyer Patentanwaltskanzlei
Pfarrer-Schultes-Weg 14
89077 Ulm (DE)**

(54) **REAL-TIME CARBON EMISSION ACCOUNTING METHOD AND APPARATUS CONSIDERING GREEN ELECTRICITY**

(57)    The present disclosure provides a real-time carbon emission accounting method and apparatus considering green electricity. The real-time carbon emission accounting method includes: periodically obtaining influencing factor data, where the influencing factor data includes at least green electricity in net electricity exported from another country to China, and green electricity in an annual total generating capacity within a geographical scope of China's power grid; inputting the influencing factor data into a preset real-time carbon emission factor prediction model for processing to obtain an updated real-time carbon emission factor; obtaining activity data of a to-be-accounted enterprise; and calculating a carbon emission accounting result based on the activity data and the updated real-time carbon emission factor. This solution utilizes the real-time carbon emission factor prediction model to predict and update a carbon emission factor to avoid a current existing hysteresis nature of the carbon emission factor, and considers the green electricity when predicting and updating the carbon emission factor, such that the carbon emission accounting result can accurately reflect an indirect carbon emission generated by use of electricity under the existing energy structure.

Periodically obtain influencing factor data — S101

Input the influencing factor data into a preset real-time carbon emission factor prediction model for predicting and updating the carbon emission factor, to predict an updated real-time carbon emission factor — S102

Obtain activity data of a to-be-accounted enterprise — S103

Calculate a carbon emission accounting result based on the activity data and the updated real-time carbon emission factor — S104

**FIG. 1**

## Description

### TECHNICAL FIELD

The present disclosure relates to the technical field of carbon emission accounting, and specifically, to a real-time carbon emission accounting method and apparatus considering green electricity.

### BACKGROUND

The emission-factor approach is currently the most widely and commonly used carbon emission accounting method. However, an emission factor currently used is updated slowly, and a regional average carbon emission factor cannot be used to accurately calculate a carbon emission for an enterprise, failing to fully reflect environmental value of the enterprise in using green electricity. As a result, a carbon emission accounting result cannot accurately reflect an indirect carbon emission generated by use of electricity under the existing energy structure.

### SUMMARY

In view of this, the embodiments of the present disclosure provide a real-time carbon emission accounting method and apparatus considering green electricity, such that a calculated carbon emission accounting result can accurately reflect an indirect carbon emission generated by use of electricity under the existing energy structure.
To achieve the foregoing objective, the embodiments of the present disclosure provide following technical solutions:
A first aspect of the embodiments of the present disclosure provides a real-time carbon emission accounting method considering green electricity, including:

periodically obtaining influencing factor data, where the influencing factor data includes at least a direct carbon dioxide emission generated by China's thermal power generation, an average carbon dioxide emission factor for power generation based on net electricity exported from another country to China, an annual total generating capacity within a geographical scope of China's power grid, green electricity in the net electricity exported from the another country to China, and green electricity in the annual total generating capacity within the geographical scope of China's power grid;
inputting the influencing factor data into a preset real-time carbon emission factor prediction model for predicting and updating a carbon emission factor, to predict an updated real-time carbon emission factor, where the real-time carbon emission factor prediction model is obtained by training a neural network model based on historical influencing factor data and a historical carbon emission factor;
obtaining activity data of a to-be-accounted enterprise; and
calculating a carbon emission accounting result based on the activity data and the updated real-time carbon emission factor.

Preferably, the neural network model is a long short-term memory (LSTM) network model; and

a process of obtaining the real-time carbon emission factor prediction model through the training based on the historical influencing factor data and the historical carbon emission factor includes:
preprocessing the historical influencing factor data, where before the real-time carbon emission factor prediction model is trained, a pre-established carbon emission factor calculation model for the green electricity is used to calculate a carbon emission factor to distinguish the green electricity from non-green electricity;
slicing the historical carbon emission factor and preprocessed historical influencing factor data to construct a corresponding dataset, to divide the historical influencing factor data and the historical carbon emission factor into a plurality of windows in chronological order, where each window contains historical data within preset time to enable the real-time carbon emission factor prediction model to learn a pattern and a trend in a time series based on past data;
dividing the dataset into a training set and a test set; and
training the LSTM network model by the training set and the test set, to obtain the real-time carbon emission factor prediction model.

Preferably, the activity data includes an electricity consumption of the to-be-accounted enterprise within preset duration; and

the calculating a carbon emission accounting result based on the activity data and the updated real-time carbon emission factor includes:

calculating a product of the electricity consumption of the to-be-accounted enterprise within the preset duration and the updated real-time carbon emission factor to obtain the carbon emission accounting result.

Preferably, after the calculating a carbon emission accounting result based on the activity data and the updated real-time carbon emission factor, the real-time carbon emission accounting method further includes:

outputting the carbon emission accounting result.

A second aspect of the embodiments of the present disclosure provides a real-time carbon emission accounting apparatus considering green electricity, including:

a first obtaining unit configured to periodically obtain influencing factor data, where the influencing factor data includes at least a direct carbon dioxide emission generated by China's thermal power generation, an average carbon dioxide emission factor for power generation based on net electricity exported from another country to China, an annual total generating capacity within a geographical scope of China's power grid, green electricity in the net electricity exported from the another country to China, and green electricity in the annual total generating capacity within the geographical scope of China's power grid;

a prediction unit configured to input the influencing factor data into a preset real-time carbon emission factor prediction model for predicting and updating a carbon emission factor, to predict an updated real-time carbon emission factor, where the real-time carbon emission factor prediction model is obtained by training a neural network model based on historical influencing factor data and a historical carbon emission factor;

a second obtaining unit configured to obtain activity data of a to-be-accounted enterprise; and

a calculation unit configured to calculate a carbon emission accounting result based on the activity data and the updated real-time carbon emission factor.

Preferably, the neural network model is an LSTM network model; and the prediction unit includes:

a preprocessing module configured to preprocess the historical influencing factor data, where before the real-time carbon emission factor prediction model is trained, a pre-established carbon emission factor calculation model for the green electricity is used to calculate a carbon emission factor to distinguish the green electricity from non-green electricity;

a processing module configured to slice the historical carbon emission factor and preprocessed historical influencing factor data to construct a corresponding dataset, to divide the historical influencing factor data and the historical carbon emission factor into a plurality of windows in chronological order, where each window contains historical data within preset time to enable the real-time carbon emission factor prediction model to learn a pattern and a trend in a time series based on past data;

a division module configured to divide the dataset into a training set and a test set; and

a training module configured to train the LSTM network model by the training set and the test set, to obtain the real-time carbon emission factor prediction model.

Preferably, the activity data includes an electricity consumption of the to-be-accounted enterprise within preset duration; and the calculation unit is specifically configured to: calculate a product of the electricity consumption of the to-be-accounted enterprise within the preset duration and the updated real-time carbon emission factor to obtain the carbon emission accounting result.

Preferably, the real-time carbon emission accounting apparatus further includes:

an output unit configured to output the carbon emission accounting result.

A third aspect of the embodiments of the present disclosure provides an electronic device, including a processor and a memory, where the processor and the memory are connected through a communication bus; the processor is configured to call and execute a program stored in the memory; and the memory is configured to store the program, and the program is used to implement the real-time carbon emission accounting method considering green electricity disclosed in the first aspect of the embodiments of the present disclosure.

A fourth aspect of the embodiments of the present disclosure provides a computer-readable storage medium, storing a computer-executable instruction, where the computer-executable instruction is used to execute the real-time carbon emission accounting method considering green electricity disclosed in the first aspect of the embodiments of the present disclosure.

Based on the above real-time carbon emission accounting method and apparatus considering green electricity provided in the embodiments of the present disclosure, the real-time carbon emission accounting method includes: periodically obtaining influencing factor data, where the influencing factor data includes at least green electricity in net electricity exported from another country to China, and green electricity in an annual total generating capacity within a geographical scope of China's power grid; inputting the influencing factor data into a preset real-time carbon emission factor prediction model for predicting and updating a carbon emission factor, to predict an updated real-time carbon emission factor; obtaining activity data of a to-be-accounted enterprise; and calculating a carbon emission accounting result based on the activity data and the updated real-time carbon emission factor. In this solution, the influencing factor data containing green electricity data is input into the real-time carbon emission factor prediction model for prediction and updating to obtain the updated real-time carbon emission factor. The carbon emission accounting result is calculated using the updated real-time carbon emission factor. The real-time carbon emission factor prediction model is used to process the influencing factor data containing at least the green electricity data to predict and update the carbon emission factor, to avoid a current existing hysteresis nature of the carbon emission factor. In addition, the green electricity is considered when the carbon emission factor is predicted and updated, such that the carbon emission accounting result can accurately reflect an indirect carbon emission generated by use of electricity under the existing energy structure.

## BRIEF DESCRIPTION OF THE DRAWINGS

To describe the technical solutions in the embodiments of the present disclosure or in the prior art more clearly, the accompanying drawings required for describing the embodiments or the prior art will be briefly described below. Apparently, the accompanying drawings in the following description merely show the embodiments of the present disclosure, and those of ordinary skill in the art can still derive other accompanying drawings from the provided accompanying drawings without creative efforts.

FIG. 1 is a flowchart of a real-time carbon emission accounting method considering green electricity according to an embodiment of the present disclosure;
FIG. 2 is a schematic structural diagram of an LSTM network model according to an embodiment of the present disclosure;
FIG. 3 is another flowchart of a real-time carbon emission accounting method considering green electricity according to an embodiment of the present disclosure;
FIG. 4 is a structural block diagram of a real-time carbon emission accounting apparatus considering green electricity according to an embodiment of the present disclosure;
FIG. 5 is another structural block diagram of a real-time carbon emission accounting apparatus considering green electricity according to an embodiment of the present disclosure; and
FIG. 6 is still another structural block diagram of a real-time carbon emission accounting apparatus considering green electricity according to an embodiment of the present disclosure.

## DETAILED DESCRIPTION

The technical solutions of the embodiments of the present disclosure are clearly and completely described below with reference to the accompanying drawings in the embodiments of the present disclosure. Apparently, the described embodiments are merely a part rather than all of the embodiments of the present disclosure. All the other embodiments derived by those of ordinary skill in the art based on the embodiments of the present disclosure without creative efforts shall fall within the protection scope of the present disclosure.

In the present disclosure, the terms "include", "comprise", "contain", or any other variations thereof are intended to cover non-exclusive inclusion, such that a process, a method, an article, or a device that includes a series of elements not only includes those elements, but also includes other elements that are not explicitly listed, or also includes inherent elements of the process, the method, the article, or the device. Without more restrictions, an element defined by a sentence "including/comprising a ..." does not exclude the presence of additional identical elements in the process, the method, the article, or the device that includes the element.

As can be seen from BACKGROUND, an emission factor currently used is updated slowly, and a regional average carbon emission factor cannot be used to accurately calculate a carbon emission for an enterprise, failing to fully reflect environmental value of the enterprise in using green electricity. As a result, a carbon emission accounting result cannot accurately reflect an indirect carbon emission generated by use of electricity under the existing energy structure.

Therefore, the embodiments of the present disclosure provide a real-time carbon emission accounting method and apparatus considering green electricity. Influencing factor data containing green electricity data is input into a real-time carbon emission factor prediction model for prediction and updating to obtain an updated real-time carbon emission factor. A carbon emission accounting result is calculated using the updated real-time carbon emission factor. The real-time carbon emission factor prediction model is used to process the influencing factor data containing at least the green electricity data to predict and update a carbon emission factor, to avoid a current existing hysteresis nature of the carbon emission factor. In addition, the green electricity is considered when the carbon emission factor is predicted and updated, such that the carbon emission accounting result can accurately reflect an indirect carbon emission generated by use of electricity under the existing energy structure.

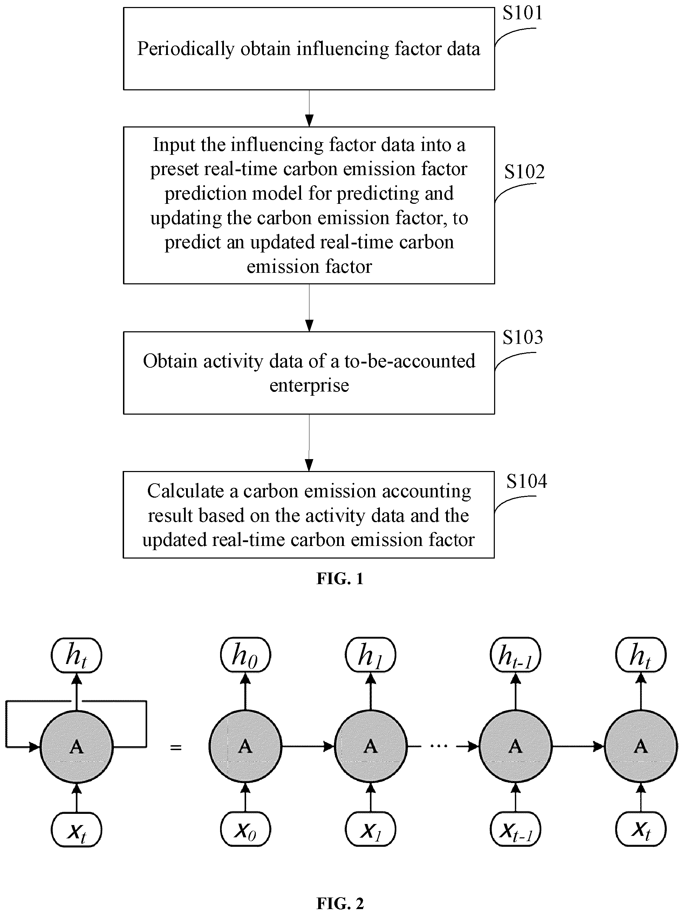

FIG. 1 is a flowchart of a real-time carbon emission accounting method considering green electricity according to an embodiment of the present disclosure. The real-time carbon emission accounting method includes following steps:

Step S101: Periodically obtain influencing factor data.

It should be noted that this solution can periodically predict and update a carbon emission factor based on a preset cycle. For example, the carbon emission factor may be predicted and updated monthly or weekly.

In a process of specifically implementing the step S101, the influencing factor data is periodically obtained based on the preset cycle. The influencing factor data includes at least a direct carbon dioxide emission generated by China's thermal power generation (which is also referred to a direct $CO_2$ emission generated by China's thermal power generation), an average carbon dioxide emission factor for power generation based on net electricity exported from another country to China (for example, an average $CO_2$ emission factor for power generation based on net electricity exported from a k country to China), an annual total generating capacity within a geographical scope of China's power grid, the net electricity exported from the another country to China (for example, the net electricity exported from the k country to China), green electricity in the net electricity exported from the another country to China (for example, green electricity in the net electricity exported from the k country to China), green electricity in the annual total generating capacity within the geographical scope of China's power grid, and the like.

Step S102: Input the influencing factor data into a preset real-time carbon emission factor prediction model for predicting and updating the carbon emission factor, to predict an updated real-time carbon emission factor.

It should be noted that the real-time carbon emission factor prediction model is obtained by training a neural network model based on historical influencing factor data and a historical carbon emission factor. The neural network model may be an LSTM network model.

In a process of specifically implementing the step S102, the influencing factor data obtained in the step S101 is input into the real-time carbon emission factor prediction model for processing (predicting and updating a real-time carbon emission factor), to obtain the updated real-time carbon emission factor output by the real-time carbon emission factor prediction model. The updated real-time carbon emission factor is a prediction result of the real-time carbon emission factor prediction model.

Step S103: Obtain activity data of a to-be-accounted enterprise.

In a process of specifically implementing the step S103, the activity data of the to-be-accounted enterprise (an electricity consuming enterprise whose carbon emission is to be accounted) is obtained. The activity data includes an electricity consumption of the to-be-accounted enterprise within preset duration.

Step S104: Calculate a carbon emission accounting result based on the activity data and the updated real-time carbon emission factor.

In a process of specifically implementing the step S104, a product of the activity data and the updated real-time carbon emission factor is calculated to obtain the carbon emission accounting result. Specifically, a product of the electricity consumption of the to-be-accounted enterprise within the preset duration and the updated real-time carbon emission factor is calculated to obtain the carbon emission accounting result.

It should be noted that the carbon emission accounting result is a greenhouse gas (GHG) emission, which can be calculated according to a following formula: GHG emission=activity data (AD) x updated real-time carbon emission factor (EF).

In some embodiments, after the carbon emission accounting result is calculated, the carbon emission accounting result can be output. For example, the carbon emission accounting result is output and displayed.

According to the above method, the real-time carbon emission factor can be updated periodically, and an updated real-time carbon emission factor in each cycle can be predicted by the real-time carbon emission factor prediction model. If a carbon emission accounting result needs to be calculated in a cycle, an updated real-time carbon emission factor corresponding to the cycle can be used for calculation.

For example, when a carbon emission accounting result needs to be calculated in a current cycle, an updated real-time carbon emission factor corresponding to the current cycle can be used for calculation. When a next cycle arrives, an updated real-time carbon emission factor corresponding to the "next cycle" is first predicted. When a carbon emission accounting result needs to be calculated in the "next cycle", the updated real-time carbon emission factor corresponding to the "next cycle" can be used for calculation.

In the embodiments of the present disclosure, the influencing factor data containing green electricity data is input into the real-time carbon emission factor prediction model for prediction and updating to obtain the updated real-time carbon emission factor. The carbon emission accounting result is calculated using the updated real-time carbon emission factor. The real-time carbon emission factor prediction model is used to process the influencing factor data containing at least the green electricity data to predict and update the carbon emission factor, to avoid a current existing hysteresis nature of the carbon emission factor. In addition, the green electricity is considered when the carbon emission factor is predicted and updated, such that the carbon emission accounting result can accurately reflect an indirect carbon emission generated by use of electricity under the existing energy structure.

The process of "obtaining the real-time carbon emission factor prediction model by training the neural network model based on the historical influencing factor data and the historical carbon emission factor" involved in the step S102 in FIG. 1 of the embodiments of the present disclosure is described through a following process including A1 to A4 by taking an example in which the neural network model is the LSTM network model.

A1: Extract key information and collect data.

In specific implementation, the key information is extracted and the data is collected to obtain the historical influencing factor data. In addition, the historical carbon emission factor is also obtained.

It should be noted that the historical influencing factor data includes at least the direct $CO_2$ emission generated by China's thermal power generation, the average $CO_2$ emission factor for the power generation based on the net electricity exported from the k country to China, the annual total generating capacity within the geographical scope of China's power grid, the net electricity exported from the k country to China, the green electricity included in the net electricity exported from the k country to China, the green electricity included in the annual total generating capacity within the geographical scope of China's power grid, and the like.

A2: Preprocess the historical influencing factor data.

In specific implementation, the historical influencing factor data is preprocessed. The preprocessing includes but is not limited to: eliminating a duplicate, eliminating an outlier, performing linear interpolation to fill a missing value, changing temporal resolution of the data, and the like.

It should be noted that before the LSTM network model is trained, a carbon emission factor calculation model considering the green electricity (used to calculate the carbon emission factor) is first established to distinguish the green electricity from another type of electricity. Specific content of the carbon emission factor calculation model is shown in a formula (1).

$$EF_{\text{grid}} = \frac{Em_{\text{grid}} + \sum_k \left( EF_k \times \left( E_{\text{imp},k} - E_{\text{imp},k}^{\text{green}} \right) \right)}{E_{\text{grid}} - E_{\text{green}} + \sum_k \left( E_{\text{imp},k} - E_{\text{imp},k}^{\text{green}} \right)} \quad (1)$$

In the formula (1), $EF_{\text{grid}}$ represents the carbon emission factor, $Em_{\text{grid}}$ represents the direct CO2 emission generated by China's thermal power generation, $EF_k$ represents the average CO2 emission factor for the power generation based on the net electricity exported from the k country to China, $E_{\text{grid}}$ represents the annual total generating capacity within the geographical scope of China's power grid, $E_{\text{imp},k}$ represents the net electricity exported from the k country to China, $E_{\text{imp},k}^{\text{green}}$ represents the green electricity included in the net electricity exported from the k country to China, and $E_{\text{green}}$ represents the green electricity included in the annual total generating capacity within the geographical scope of China's power grid.

It should be noted that a contract signed between a power plant and the electricity consuming enterprise includes a sales volume of the green electricity. Therefore, in a process of calculating the carbon emission factor according to the formula (1), the green electricity involved is calculated based on an agreed amount in the contract.

A3: Slice the historical carbon emission factor and preprocessed historical influencing factor data to construct a corresponding dataset.

It should be noted that the obtained historical influencing factor data and historical carbon emission factor in this solution can characterize a carbon emission, an energy consumption, and other situations in the past period of time (such as the past several years). A goal of training the LSTM network model is to use the historical influencing factor data and the historical carbon emission factor to predict a future carbon emission factor.

In order to construct input and output datasets required for the LSTM network model, the raw historical influencing factor data and historical carbon emission factor are sliced to construct the corresponding dataset. It can be understood that the slicing is to divide the historical influencing factor data and the historical carbon emission factor into a plurality of windows in chronological order. Each window contains historical data within preset time (historical data within the past several months or years) to enable the LSTM model to learn a pattern and a trend in a time series based on past data.

After the slicing is completed, the historical influencing factor data and historical carbon emission factor of each window are used as an input, and a carbon emission factor corresponding to the window in a future time period is used as an output to construct a set of input-output samples. A dataset used for training and verifying the LSTM network model is constructed according to the aforementioned method.

A4: Divide the dataset into a training set and a test set.

In specific implementation, the constructed dataset is divided into the training set and the test set based on a certain proportion. For example, 80% of data in the dataset is used as the training set for updating and training parameters of the LSTM network model, and the remaining 20% of the data is used as the test set for evaluating performance and a generalization capability of the model on new data.

A5: Train the LSTM network model by the training set and the test set, to obtain the real-time carbon emission factor prediction model.

In specific implementation, a PyTorch deep learning platform is used to construct the LSTM network model. The LSTM network model is trained and verified based on the training set and the test set by defining a network structure, setting a hyperparameter, selecting a loss function, and optimizing an algorithm, to obtain the real-time carbon emission factor prediction model.

It should be noted that in a training process, the LSTM network model continuously adjusts its parameters through a backpropagation algorithm to minimize a gap between a predicted output and an actual output. A structure of the LSTM network model is shown in FIG. 2. Specifically, $h_t$ represents an output variable (which is the updated real-time carbon emission factor in this solution), xt represents an input variable, including the historical carbon emission factor, the direct $CO_2$ emission generated by China's thermal power generation, the average $CO_2$ emission factor for the power generation based on the net electricity exported from the k country to China, the annual total generating capacity within the geographical scope of China's power grid, the net electricity exported from the k country to China, the green electricity included in the net electricity exported from the k country to China, and the green electricity included in the annual total generating capacity within the geographical scope of China's power grid, in other words, containing various variables in the formula (1).

The above is an explanation about obtaining the real-time carbon emission factor prediction model through the training.

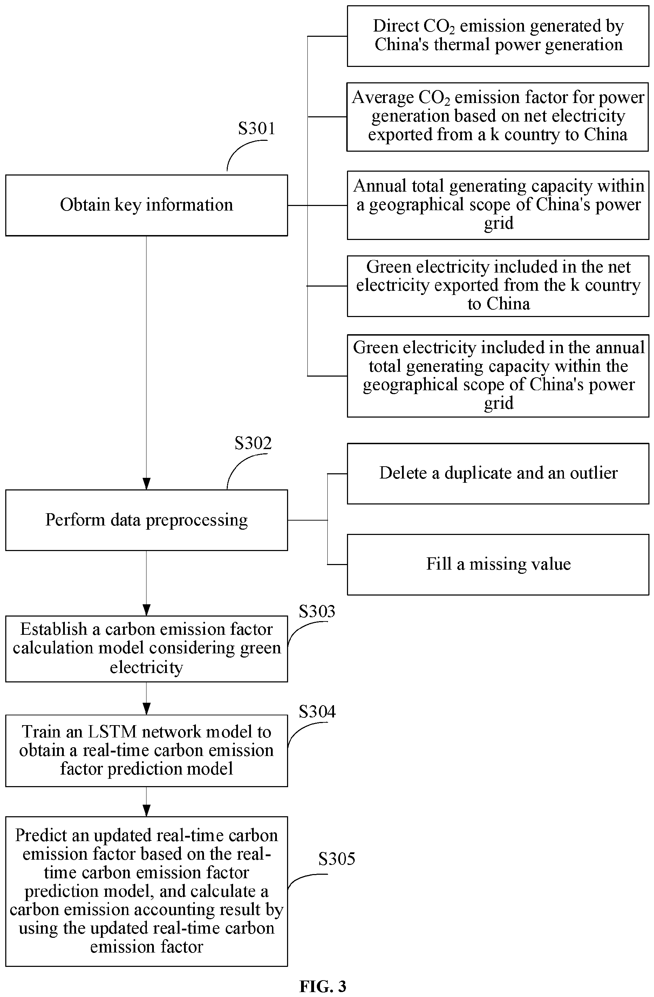

In order to better describe the above content, another flowchart of a real-time carbon emission accounting method considering green electricity is shown in FIG. 3 for illustration. FIG. 3 includes following steps:

Step S301: Obtain key information.

In a process of specifically implement the step S301, the key information is extracted and data is collected to obtain historical influencing factor data and a historical carbon emission factor.

Step S302: Perform data preprocessing.

In a process of specifically implementing the step S302, the historical influencing factor data is preprocessed. The preprocessing includes but is not limited to: eliminating a duplicate, eliminating an outlier, performing linear interpolation to fill a missing value, and the like.

Step S303: Establish a carbon emission factor calculation model considering green electricity.

Step S304: Train an LSTM network model to obtain a real-time carbon emission factor prediction model.

Step S305: Predict an updated real-time carbon emission factor based on the real-time carbon emission factor prediction model, and calculate a carbon emission accounting result by the updated real-time carbon emission factor.

From the above content, it can be seen that this solution extracts key information such as a green electricity consumption, a thermal power consumption, and energy consumption time from a contract signed by an electricity consuming enterprise as a data basis for subsequent carbon emission accounting. The carbon emission factor calculation model considering the green electricity is established. When a carbon emission factor is calculated, it is considered that a carbon emission generated by production of the green electricity is zero. Therefore, in a formula for calculating the carbon emission factor, generating capacity calculation should exclude the green electricity, and only a carbon emission generated by non-green electricity is calculated, in order to avoid inaccurate carbon emission accounting and repeated calculation of an environmental attribute of the green electricity. Based on the carbon emission factor calculation model considering the green electricity, the carbon emission factor is predicted through the LSTM network model, thereby avoiding a hysteresis nature of the carbon emission factor. Finally, a carbon emission (a carbon emission accounting result) of the enterprise is accurately calculated based on the updated real-time carbon emission factor and activity data of the electricity consuming enterprise.

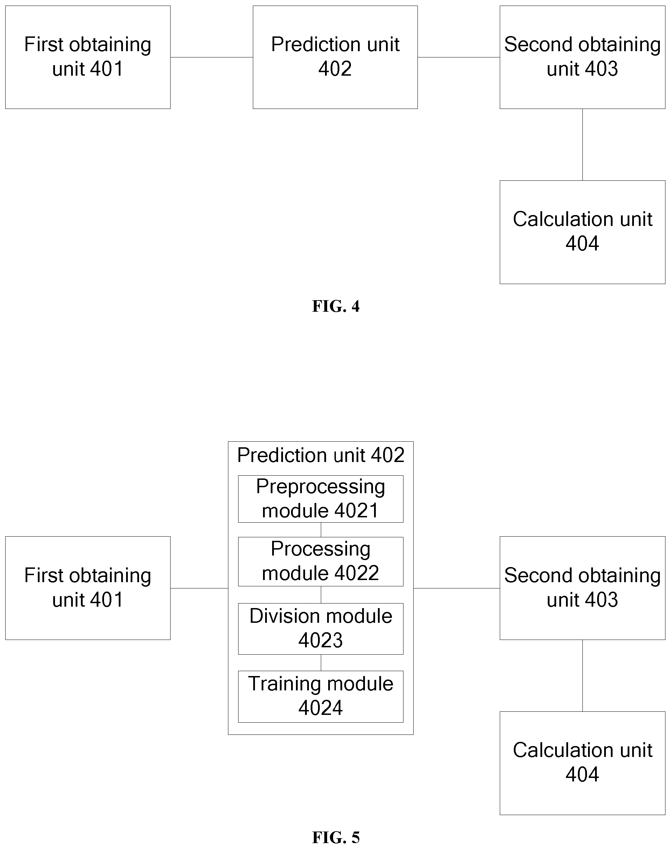

Corresponding to the real-time carbon emission accounting method considering green electricity provided in the above embodiments of the present disclosure, as shown in FIG. 4, the embodiments of the present disclosure further provide a real-time carbon emission accounting apparatus considering green electricity. The real-time carbon emission accounting apparatus includes a first obtaining unit 401, a prediction unit 402, a second obtaining unit 403, and a calculation unit 404.

The first obtaining unit 401 is configured to periodically obtain influencing factor data. The influencing factor data includes at least a direct carbon dioxide emission generated by China's thermal power generation, an average carbon dioxide emission factor for power generation based on net electricity exported from another country to China, an annual total generating capacity within a geographical scope of China's power grid, green electricity included in the net electricity exported from the another country to China, and green electricity included in the annual total generating capacity within the geographical scope of China's power grid.

The prediction unit 402 is configured to input the influencing factor data into a preset real-time carbon emission factor prediction model for predicting and updating a carbon emission factor, to predict an updated real-time carbon emission factor. The real-time carbon emission factor prediction model is obtained by training a neural network model based on historical influencing factor data and a historical carbon emission factor.

The second obtaining unit 403 is configured to obtain activity data of a to-be-accounted enterprise.

The calculation unit 404 is configured to calculate a carbon emission accounting result based on the activity data and the updated real-time carbon emission factor.

In specific implementation, the activity data includes an electricity consumption of the to-be-accounted enterprise within preset duration. The calculation unit 404 is specifically configured to: calculate a product of the electricity consumption of the to-be-accounted enterprise within the preset duration and the updated real-time carbon emission factor to obtain the carbon emission accounting result.

In the embodiments of the present disclosure, the influencing factor data containing green electricity data is input into the real-time carbon emission factor prediction model for prediction and updating to obtain the updated real-time carbon emission factor. The carbon emission accounting result is calculated using the updated real-time carbon emission factor. The real-time carbon emission factor prediction model is used to process the influencing factor data containing at least the green electricity data to predict and update the carbon emission factor, to avoid a current existing hysteresis nature of the carbon emission factor. In addition, the green electricity is considered when the carbon emission factor is predicted and updated, such that the carbon emission accounting result can accurately reflect an indirect carbon emission generated by use of electricity under the existing energy structure.

Preferably, referring to FIG. 4, FIG. 5 is another structural block diagram of a real-time carbon emission accounting apparatus considering green electricity according to an embodiment of the present disclosure. The neural network model is an LSTM network model, and the prediction unit 402 includes a preprocessing module 4021, a processing module 4022, a division module 4023, and a training module 4024.

The preprocessing module 4021 is configured to preprocess the historical influencing factor data.

The processing module 4022 is configured to slice the historical carbon emission factor and preprocessed historical influencing factor data to construct a corresponding dataset.

The division module 4023 is configured to divide the dataset into training set and a test set.

The training module 4024 is configured to train the LSTM network model by the training set and the test set, to obtain the real-time carbon emission factor prediction model.

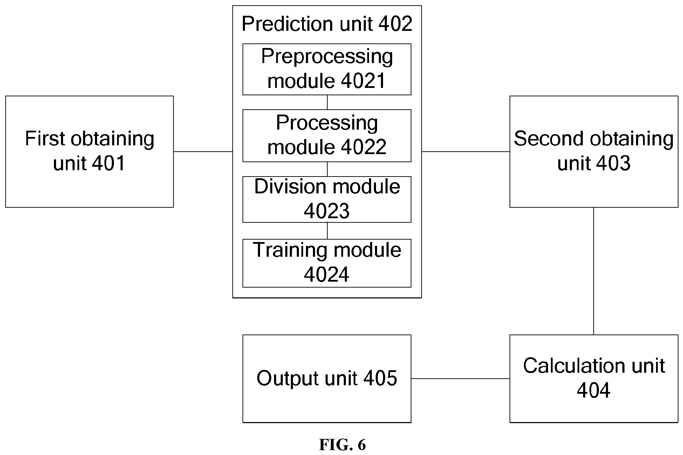

Preferably, referring to FIG. 5, FIG. 6 is still another structural block diagram of a real-time carbon emission accounting apparatus considering green electricity according to an embodiment of the present disclosure. The real-time carbon emission accounting apparatus further includes:

an output unit 405 configured to output the carbon emission accounting result.

Preferably, the embodiments of the present disclosure further provide an electronic device, including a processor and a memory. The processor and the memory are connected through a communication bus. The processor is configured to call and execute a program stored in the memory. The memory is configured to store the program, and the program is used to implement the real-time carbon emission accounting method considering green electricity provided in the foregoing method embodiments.

Preferably, the embodiments of the present disclosure further provide a computer-readable storage medium. The computer-readable storage medium stores a computer-executable instruction, and the computer-executable instruction is used to perform the real-time carbon emission accounting method considering green electricity provided in the foregoing method embodiments.

In conclusion, the embodiments of the present disclosure provide a real-time carbon emission accounting method and apparatus considering green electricity. Influencing factor data containing green electricity data is input into a real-time carbon emission factor prediction model for prediction and updating to obtain an updated real-time carbon emission factor. A carbon emission accounting result is calculated using the updated real-time carbon emission factor. The real-time carbon emission factor prediction model is used to process the influencing factor data containing at least the green electricity data to predict and update a carbon emission factor, to avoid a current existing hysteresis nature of the carbon emission factor. In addition, the green electricity is considered when the carbon emission factor is predicted and updated, such that the carbon emission accounting result can accurately reflect an indirect carbon emission generated by use of electricity under the existing energy structure.

The embodiments in this specification are described in a progressive manner. For same or similar parts between embodiments, reference may be made to each other. Each embodiment focuses on a difference from other embodiments. Particularly, for a system or system embodiment, since it is basically similar to the method embodiment, the description is relatively simple, and reference can be made to the description of the method embodiment. The system or system embodiment described above is merely schematic. The unit described as a separate component may or may not be physically separated, and a component displayed as a unit may or may not be a physical unit, that is, the component may be located at one place, or distributed on a plurality of network units. Some or all of the modules may be selected based on actual needs to achieve the objectives of the solutions of the embodiments. Those of ordinary skill in the art can understand and implement the embodiments without creative effort.

A person skilled in the art may further realize that, the units and the algorithm steps of the examples described in the embodiments of the present disclosure can be implemented by electronic hardware, computer software, or a combination thereof. In order to clearly describe the interchangeability between the hardware and the software, compositions and steps of each example have been generally described according to functions in the foregoing descriptions. Whether the functions are performed by hardware or software depends on particular applications and design constraints of the technical solutions. A person skilled in the art may use different methods to implement the described functions for each specific application, but such implementation should not be considered to be beyond the scope of the present disclosure.

The above description of the disclosed embodiments enables those skilled in the art to achieve or use the present disclosure. Various modifications to these embodiments are readily apparent to those skilled in the art, and the generic principles defined herein may be practiced in other embodiments without departing from the scope of the present disclosure. Accordingly, the present disclosure will not be limited to these embodiments shown herein, but is to fall within the widest scope consistent with the principles and novel features disclosed herein.

**Claims**

1.  A real-time carbon emission accounting method considering green electricity, comprising:

    periodically obtaining influencing factor data, wherein the influencing factor data comprises at least a direct carbon dioxide emission generated by China's thermal power generation, an average carbon dioxide emission factor for power generation based on net electricity exported from another country to China, an annual total generating capacity within a geographical scope of China's power grid, green electricity in the net electricity exported from the another country to China, and green electricity in the annual total generating capacity within the geographical scope of China's power grid;
    inputting the influencing factor data into a preset real-time carbon emission factor prediction model for predicting and updating a carbon emission factor, to predict an updated real-time carbon emission factor, wherein the real-time carbon emission factor prediction model is obtained by training a neural network model based on historical influencing factor data and a historical carbon emission factor;
    obtaining activity data of a to-be-accounted enterprise; and
    calculating a carbon emission accounting result based on the activity data and the updated real-time carbon emission factor; wherein
    the neural network model is a long short-term memory (LSTM) network model; and
    a process of obtaining the real-time carbon emission factor prediction model through the training based on the historical influencing factor data and the historical carbon emission factor comprises:

        preprocessing the historical influencing factor data, wherein before the real-time carbon emission factor prediction model is trained, a pre-established carbon emission factor calculation model for the green electricity is used to calculate a carbon emission factor to distinguish the green electricity from non-green electricity;
        slicing the historical carbon emission factor and preprocessed historical influencing factor data to construct a corresponding dataset, to divide the historical influencing factor data and the historical carbon emission factor into a plurality of windows in chronological order, wherein each window contains historical data within preset time to enable the real-time carbon emission factor prediction model to learn a pattern and a trend in a time series based on past data;
        dividing the dataset into a training set and a test set; and
        training the LSTM network model by the training set and the test set, to obtain the real-time carbon emission factor prediction model.

2.  The method according to claim 1, wherein the activity data comprises an electricity consumption of the to-be-accounted enterprise within preset duration; and
    the calculating a carbon emission accounting result based on the activity data and the updated real-time carbon emission factor comprises:
    calculating a product of the electricity consumption of the to-be-accounted enterprise within the preset duration and the updated real-time carbon emission factor to obtain the carbon emission accounting result.

3.  The method according to claim 1 or 2, after the calculating a carbon emission accounting result based on the activity data and the updated real-time carbon emission factor, further comprising:
    outputting the carbon emission accounting result.

4. A real-time carbon emission accounting apparatus considering green electricity, comprising:

a first obtaining unit configured to periodically obtain influencing factor data, wherein the influencing factor data comprises at least a direct carbon dioxide emission generated by China's thermal power generation, an average carbon dioxide emission factor for power generation based on net electricity exported from another country to China, an annual total generating capacity within a geographical scope of China's power grid, green electricity in the net electricity exported from the another country to China, and green electricity in the annual total generating capacity within the geographical scope of China's power grid;

a prediction unit configured to input the influencing factor data into a preset real-time carbon emission factor prediction model for predicting and updating a carbon emission factor, to predict an updated real-time carbon emission factor, wherein the real-time carbon emission factor prediction model is obtained by training a neural network model based on historical influencing factor data and a historical carbon emission factor;

a second obtaining unit configured to obtain activity data of a to-be-accounted enterprise; and

a calculation unit configured to calculate a carbon emission accounting result based on the activity data and the updated real-time carbon emission factor; wherein

the neural network model is an LSTM network model; and the prediction unit comprises:

a preprocessing module configured to preprocess the historical influencing factor data, wherein before the real-time carbon emission factor prediction model is trained, a pre-established carbon emission factor calculation model for the green electricity is used to calculate a carbon emission factor to distinguish the green electricity from non-green electricity;

a processing module configured to slice the historical carbon emission factor and preprocessed historical influencing factor data to construct a corresponding dataset, to divide the historical influencing factor data and the historical carbon emission factor into a plurality of windows in chronological order, wherein each window contains historical data within preset time to enable the real-time carbon emission factor prediction model to learn a pattern and a trend in a time series based on past data;

a division module configured to divide the dataset into a training set and a test set; and

a training module configured to train the LSTM network model by the training set and the test set, to obtain the real-time carbon emission factor prediction model.

5. The apparatus according to claim 4, wherein the activity data comprises an electricity consumption of the to-be-accounted enterprise within preset duration; and the calculation unit is specifically configured to: calculate a product of the electricity consumption of the to-be-accounted enterprise within the preset duration and the updated real-time carbon emission factor to obtain the carbon emission accounting result.

6. The apparatus according to claim 4 or 5, further comprising:
an output unit configured to output the carbon emission accounting result.

7. An electronic device, comprising a processor and a memory, wherein the processor and the memory are connected through a communication bus; the processor is configured to call and execute a program stored in the memory; and the memory is configured to store the program, and the program is used to implement the real-time carbon emission accounting method considering green electricity according to any one of claims 1 to 3.

8. A computer-readable storage medium, storing a computer-executable instruction, wherein the computer-executable instruction is used to execute the real-time carbon emission accounting method considering green electricity according to any one of claims 1 to 3.

S101

Periodically obtain influencing factor data

Input the influencing factor data into a
preset real-time carbon emission factor
prediction model for predicting and
updating the carbon emission factor, to
predict an updated real-time carbon
emission factor

S102

Obtain activity data of a to-be-accounted
enterprise

S103

Calculate a carbon emission accounting
result based on the activity data and the
updated real-time carbon emission factor

S104

**FIG. 1**

**FIG. 2**

FIG. 3

**FIG. 4**

**FIG. 5**

**FIG. 6**

Europäisches
Patentamt

European
Patent Office

Office européen
des brevets

# EUROPEAN SEARCH REPORT

**Application Number**

EP 24 19 7697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/372588 A1 (SHI WENBO [US]) 26 November 2020 (2020-11-26) * paragraphs [0021] - [0070] * | 1-8 | INV. G06Q10/04 G06Q50/06 G06Q40/12 |
| A | CN 115 423 386 A (SHANGHAI ENVISION KECHUANG INTELLIGENT TECH CO LTD ET AL.) 2 December 2022 (2022-12-02) * the whole document * | 1,4,7,8 | G06N3/02 G06N20/00 G06N3/044 |
| A | US 2019/379589 A1 (RYAN SID [CA] ET AL) 12 December 2019 (2019-12-12) * paragraphs [0075] - [0083], [0134] * | 1,4,7,8 | |

**TECHNICAL FIELDS SEARCHED (IPC)**

G06Q
G06N

The present search report has been drawn up for all claims

| Place of search | Date of completion of the search | Examiner |
|---|---|---|
| Munich | 20 December 2024 | Melis, Caterina |

EPO FORM 1503 03.82 (P04C01)

## ANNEX TO THE EUROPEAN SEARCH REPORT
## ON EUROPEAN PATENT APPLICATION NO.

EP 24 19 7697

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2024

| Patent document cited in search report | Publication date | Patent family member(s) | Publication date |
|---|---|---|---|
| US 2020372588 A1 | 26-11-2020 | US 2020372588 A1<br>US 2022358606 A1<br>US 2023334599 A1 | 26-11-2020<br>10-11-2022<br>19-10-2023 |
| CN 115423386 A | 02-12-2022 | NONE | |
| US 2019379589 A1 | 12-12-2019 | NONE | |

EPO FORM P0459

For more details about this annex : see Official Journal of the European Patent Office, No. 12/82